Europäisches Patentamt

European Patent Office

Office européen des brevets

(11) Veröffentlichungsnummer: **0 268 320**
**A1**

(12) # EUROPÄISCHE PATENTANMELDUNG

(21) Anmeldenummer: **87202127.4**

(51) Int. Cl.⁴: **G01B 13/12**

(22) Anmeldetag: **04.11.87**

(30) Priorität: **10.11.86 DE 3638334**

(43) Veröffentlichungstag der Anmeldung:
**25.05.88 Patentblatt 88/21**

(84) Benannte Vertragsstaaten:
**DE FR GB**

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB**

(72) Erfinder: **Steinseifer, Dieter**
**Helsbachstrasse 28 A**
**D-5900 Siegen(DE)**
Erfinder: **Schwertner, Ivar-Rudolf**
**Nordring 13c**
**D-5962 Wenden 3(DE)**

(74) Vertreter: **Koch, Ingo, Dr.-Ing. et al**
**Philips Patentverwaltung GmbH**
**Wendenstrasse 35 Postfach 10 51 49**
**D-2000 Hamburg 1(DE)**

(54) **Vorrichtung zur Messung des Abstandes dicht benachbarter Gegenstände.**

(57) Die Erfindung betrifft eine Vorrichtung zur Messung des Abstandes dicht benachbarter Gegenstände, bei welcher die mit einer membranartigen Wand begrenzte Kammer eines mit Flüssigkeit gefüllten Abstandsmeßfühlers durch Auslenkung eine Volumenverringerung erfährt und dabei ein Teil der Flüssigkeit in einen von außen sichtbaren Steigkanal ausweicht. Diese Anordnung wird besonders handlich dadurch, daß der Abstandsmeßfühler (1) aus einer starren Grundschicht (4) besteht, auf die eine feste Zwischenschicht (5) aufgebracht ist, welche Aussparungen zur Bildung der Kammer und des sich an eine Öffnung der Kammer (7) anschließenden Steigkanals (8) aufweist, die von der starren Grundschicht (4) einer gummielastischen, mindestens teilweise transparenten Deckschicht (6) abgeschlossen sind.

FIG.1          FIG.2

## Vorrichtung zur Messung des Abstandes dicht benachbarter Gegenstände

Die Erfindung bezieht sich auf eine Vorrichtung zur Messung des Abstandes dicht benachbarter Gegenstände, bei welcher die mit einer membranartigen Wand begrenzte Kammer eines mit Flüssigkeit gefüllten Abstandsmeßfühlers durch Auslenkung eine Volumenverringerung erfährt und dabei ein Teil der Flüssigkeit in einen von außen sichtbaren Steigkanal ausweicht.

Durch die DE-PS 29 831 ist eine Anordnung der eingangs genannten Art bekannt, bei welcher ein in seiner Achsrichtung verschieblicher Bolzen die Membran einer mit Flüssigkeit gefüllten Dose eindrückt und dabei ein Teil der Flüssigkeit in einem engen Röhrchen aufsteigt. Diese Anordnung besteht aus vielen Einzelteilen, ist verhältnismäßig groß und läßt sich nicht in den Zwischenraum dicht benachbarter Gegenstände schieben und ist damit als Abstandsmeßfühler, insbesondere bei Nadeldruckern, ungeeignet.

Der Erfindung liegt die Aufgabe zugrunde, eine Meßanordnung der eingangs genannten Art so handlich und klein zu gestalten, daß sie als Abstandsfühlerlehre zur Messung und/oder Einstellung des Abstandes eng benachbarter Gegenstände, insbesondere zwischen Druckkopf und Walze bei Nadeldruckern, geeignet ist.

Die Aufgabe wird erfindungsgemäß dadurch gelöst, daß der Abstandsmeßfühler aus einer starren Grundschicht besteht, auf die eine feste Zwischenschicht aufgebracht ist, welche Ausnehmungen zur Bildung der Kammer und des sich an eine Öffnung der Kammer anschließenden Steigkanals aufweist, die von der starren Grundschicht und einer gummielastischen, mindestens teilweise transparenten Deckschicht abgeschlossen sind.

Die im Bereich der Kammer membranartig wirkende gummielastische Deckschicht hat eine so geringe Rückstellkraft, daß durch sie keine das Meßergebnis verfälschende elastische Verschiebung der Gegenstände, zwischen denen der Abstand gemessen wird, entsteht.

Bei einem solchen empfindlichen Abstandsmeßfühler können sich aber atmosphärische Luftdruckänderungen auf das Meßergebnis störend bemerkbar machen, falls sich die Flüssigkeit in einer allseitig geschlossenen Kammer befindet. Um dies zu vermeiden, kann am der Kammer abgewandten Ende des Steigkanals beispielsweise eine gasdurchlässige poröse Schicht liegen, die die Verbindung zur Atmosphäre herstellt.

Um deutlich und schnell feststellen zu können, ob Flüssigkeit aus dem Abstandsmeßfühler ausgelaufen ist, kann eine saugfähige Schicht am der Kammer abgewandten Ende des Steigkanals liegen, die sich durch die im Steigkanal befindliche Flüssigkeit kontrastreich einfärbt.

Zur besseren Ablesbarkeit des Flüssigkeitsstandes an dem mit einer Markierung versehenen Steigkanal kann die Flüssigkeit mit einer Kontrastfarbe eingefärbt sein.

Um den Einfluß der Temperatur auf die Messung so klein wie möglich zu halten, kann ein Material für die feste Zwischenschicht mit einem solchen Längsausdehnungskoeffizienten gewählt werden, daß die Tiefe des Steigkanals bei einer Erhöhung der Umgebungstemperatur in dem Maße zunimmt, daß die Volumenvergrößerung der Flüssigkeit in etwa ausgeglichen wird.

Eine konstruktiv einfache aus Stanzteilen herzustellende Anordnung ergibt sich, wenn der Steigkanal einen rechteckförmigen Querschnitt aufweist.

Zur Begrenzung der Maximalauslenkung der elastischen Deckschicht über das zulässige Maß hinaus kann am Boden der Kammer ein dünnes steifes Metallplättchen befestigt sein, welches eine kleinere Grundfläche als die der Kammer hat. Es hat sich auch gezeigt, daß durch diese Maßnahme ein Festhaften der gummielastischen Deckschicht am Boden der Kammer verhindert wird.

Der Steigkanal kann vorteilhaft an seinem Endbereich eine als Ausdehnungshohlraum dienende Verbreiterung aufweisen, durch welche bei zu starker Eindrückung der elastischen Deckschicht überschüssige Flüssigkeit aufgefangen wird. Ferner können Luftbläschen, die sich im Steigkanal befinden, durch Drücken auf die gummielastische Deckschicht in den Ausdehnungshohlraum abgeleitet werden.

Ein Ausführungsbeispiel der Erfindung wird anhand der Zeichnung näher erläutert.

Figur 1 zeigt eine Aufsicht auf einen erfindungsmäßigen Abstandsmeßfühler.

Die Figur 2 zeigt einen Längsschnitt entlang der Schnittlinie I-I nach Fig. 1.

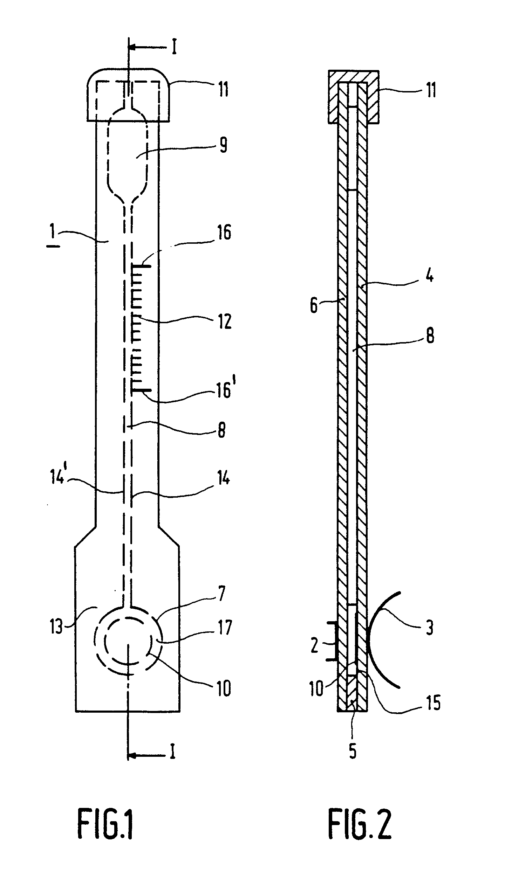

Der Abstandsmeßfühler 1, der, wie aus der Schnittansicht nach Fig. 2 zu ersehen ist, zwischen dem Druckkopf 2 und Walze 3 eines Nadeldruckers liegt, besteht im wesentlichen aus drei übereinandergeklebten streifenförmigen Folien. Direkt an der Walze 3 liegt als unterste Folie eine starre Grundschicht 4, die aus einem dünnen Edelstahlblechstreifen besteht und dadurch für die nötige Steifigkeit des Abstandsmeßfühlers 1 sorgt. Auf dieser Grundschicht 4 befindet sich eine Zwischenschicht 5 aus einem festen Kunststoff, darüber eine aus einem wesentlich nachgiebigeren elastichen Kunststoff bestehende transparente Deckschicht 6. Die Zwischenschicht 5 enthält Ausnehmungen für die Bildung einer Kammer 7 sowie des Steigkanals 8, die von der Grundschicht 4 und der Deckschicht 6 abgeschlossen sind. Die Ausnehmungen sind durch einen Stanzvorgang hergestellt. Im Endbereich des Steigkanals 8 ist eine wannenförmige Verbreiterung 9 vorgesehen. Am Boden der Kammer 7 ist auf der Oberfläche der Grundschicht 4 ein rundes Plättchen 10 befestigt, welches einerseits das Anhaften der Deckschicht 6 auf der Grundschicht 4 bei einer zu starken Eindrückung der elastischen Deckschicht 6 im Bereich der Kammer 7 verhindert und andererseits die maximale Auslenkung der Deckschicht 6 begrenzt, so daß die Flüssigkeit nicht zu weit aus der Kammer 7 herausgepreßt werden kann. Auch bei ganz eingedrückter Deckschicht 6 verbleibt ein mit Flüssigkeit gefüllter ringförmiger Kanal 17.

Da unterschiedliche atmosphärische Luftdrücke bei einem luftdicht abgeschlossenen Steigkanal 8 das Meßergebnis verfälschen würden, verschließt eine luftdurchlässige Kappe das offene Ende des Steigkanals 8. Diese Kappe 11 könnte aus einem Flüssigkeit sperrenden Material bestehen. Im Ausführungsbeispiel wurde jedoch ein preiswertes saugfähiges Material verwendet, welches den Austritt der Flüssigkeit zwar nicht verhindert, aber bei einem solchen Fall anzeigt, daß die Vorrichtung unbrauchbar geworden ist. Anhand der Markierungen 12, die sich als Skala mit einem oberen Grenzwert 16 sowie einem unteren Grenzwert 16′ im mittleren Bereich des Steigkanals 8 befinden, läßt sich der Flüssigkeitsstand während der Messung gut ablesen. Außerdem zeigt das Überschreiten der Grenzwerte 16, 16′ einen unzulässigen Abstand zwischen Druckkopf 2 und Walze 3 an, der eine entsprechende Nachstellung erforderlich macht. Eine Ablesehilfe bietet die konstrastreiche Einfärbung der Flüssigkeit.

Zur Messung des Luftspaltes zwischen der Walze 3 und dem Druckkopf 2 wird der Abstandsmeßfühler 1 mit seinem etwas breiteren unteren Ende 13 derart zwischen Walze 3 und Druckkopf 2 von Hand geschoben, daß die elastische Deckschicht 6 im Bereich der Kammer 7 am Druckkopf 2 und die starre Grundschicht 4 an der Walze 3 anliegt. Je nach Abstand zwischen Walze 3 und Druckkopf 2 wird die Deckschicht 6 im Bereich der Kammer 7 mehr oder weniger weit in Richtung auf den Boden 15 der Kammer 7 durchgebogen. Dabei ändert sich das mit einer gefärbten Flüssigkeit gefüllte Kammervolumen und entsprechend auch der Flüssigkeitsspiegel, der sich bei normalen Abständen zwischen Druckkopf 2 und Walze 3 im Bereich der Grenzwerte 16, 16′ der Markierung 12 des Steigkanals 8 befindet.

Bei zu starker Durchbiegung der elastischen Deckschicht 6, z.B. bei unsachgemäßem Gebrauch des Abstandsmeßfühlers 1, kann die überschüssige Flüssigkeit in die als Überlaufbehälter ausgebildete Verbreiterung 9 am Endbereich des Steigkanals 8 abfließen.

## Ansprüche

1. Vorrichtung zur Messung des Abstandes dicht benachbarter Gegenstände, bei welcher die mit einer membranartigen Wand begrenzte Kammer eines mit Flüssigkeit gefüllten Abstandsmeßfühlers durch Auslenkung eine Volumenverringerung erfährt und dabei ein Teil der Flüssigkeit in einen von außen sichtbaren Steigkanal ausweicht, dadurch gekennzeichnet, daß der Abstandsmeßfühler (1) aus einer starren Grundschicht (4) besteht, auf die eine feste Zwischenschicht (5) aufgebracht ist, welche Aussparungen zur Bildung der Kammer und des sich an eine Öffnung der Kammer (7) anschließenden Steigkanals (8) aufweist, die von der starren Grundschicht (4) einer gummielastischen, mindestens teilweise transparenten Deckschicht (6) abgeschlossen sind.

2. Vorrichtung nach Anspruch 1, dadurch gekennzeichnet, daß am der Kammer (7) abgewandten Ende des Steigkanals (8) eine gasdurchlässige, poröse Schicht liegt, die die Verbindung zur Atmosphäre herstellt.

3. Vorrichtung nach Anspruch 1, dadurch gekennzeichnet, daß am der Kammer (7) abgewandten Ende des Steigkanals (8) eine saugfähige Schicht (11) liegt, die durch eine im Steigkanal (8) befindliche Flüssigkeit kontrastreich färbbar ist.

4. Vorrichtung nach Anspruch 1 und 2 oder 1 und 3, dadurch gekennzeichnet, daß die Flüssigkeit kontrastreich eingefärbt ist.

5. Vorrichtung nach einem der Ansprüche 1 bis 4, dadurch gekennzeichnet, daß das Material der Zwischenschicht 5 einen solchen Längsausdehnungskoeffizienten hat, daß die Tiefe des Steigkanals (8) bei einer Erhöhung der Umgebungstemperatur derart zunimmt, daß die Volumenvergrößerung der Flüssigkeit in etwa ausgeglichen wird.

6. Vorrichtung nach einem der Ansprüche 1 bis 5, dadurch gekennzeichnet, daß der Steigkanal (8) einen rechteckförmigen Querschnitt aufweist.

7. Vorrichtung nach einem der Ansprüche 1 bis 6, dadurch gekennzeichnet, daß am Boden (15) der Kammer (7) ein dünnes und steifes Plättchen (10) befestigt ist, welches eine kleinere Grundfläche als die der Kammer hat.

8. Vorrichtung nach einem der Ansprüche 1 bis 7, dadurch gekennzeichnet, daß der Endbereich des Steigkanals (8) eine als Ausdehnungshohlraum dienende Verbreiterung (9) aufweist.

9. Vorrichtung nach einem der Ansprüche 1 bis 8, dadurch gekennzeichnet, daß am Steigkanal (8) eine Skala (12) mit Grenzwerten (16,16') angebracht ist.

FIG.1          FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | DE-C- 29 831 (REINECKER) <br> * ganze Schrift * <br> --- | 1 | G 01 B 13/12 |
| A | DE-C- 212 528 (PICARD) <br> * ganze Schrift * <br> ----- | 1 | |

RECHERCHIERTE SACHGEBIETE (Int. Cl.4)

G 01 B 13/00
G 01 B 5/14
G 01 B 21/16

Der vorliegende Recherchenbericht wurde für alle Patentansprüche erstellt

| Recherchenort | Abschlußdatum der Recherche | Prüfer |
|---|---|---|
| ·BERLIN | 02-02-1988 | KOEHN G |